Europäisches Patentamt
European Patent Office
Office européen des brevets

(19)

(11) Publication number: **0 010 232**
**A1**

(12)

# EUROPEAN PATENT APPLICATION

(21) Application number: 79103802.9

(22) Date of filing: 04.10.79

(51) Int. Cl.³: **A 01 N 47/22**
//(A01N47/22, 43/40, 39/02)

(30) Priority: 12.10.78 JP 124619.78

(43) Date of publication of application:
30.04.80 Bulletin 80/9

(84) Designated Contracting States:
AT BE CH DE FR GB IT LU NL SE

(71) Applicant: KUMIAI CHEMICAL INDUSTRY CO., LTD.
4-26, Ikenohata 1-chome
Taitoh-ku, Tokyo(JP)

(72) Inventor: Iori, Shinichi
4493, Shimohirakawa, Ogasa-cho
Ogasa-gun, Shizuoka-ken(JP)

(72) Inventor: Jikihara, Kazuo
330-1, Senba
Kakegawa-shi, Shizuoka-ken(JP)

(72) Inventor: Kimura, Ichiro
1809, Kamo, Kikugawa-cho
Ogasa-gun, Shizuoka-ken(JP)

(72) Inventor: Takayama, Shuichi
4, Tomoe, cho, 1-chome
Shimizu-shi, Shizuoka-ken(JP)

(72) Inventor: Itoh, Shigekazu
88-27, Kitawaki
Shimizu-shi, Shizuoka-ken(JP)

(74) Representative: Wächtershäuser, Günter, Dr.
Gewürzmühlstrasse 5
D-8000 München 22(DE)

(54) **Herbicidal composition.**

(57) A herbicidal composition comprises a phenoxypentenoic acid derivative having the formula

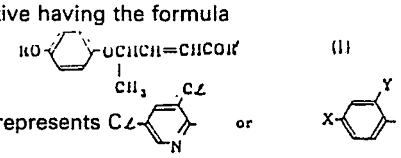

(I)

wherein R represents … or

and X represents a halogen atom or trifluoromethyl group; Y represents hydrogen atom or chlorine atom; R' represents an alkoxyl group, an alkenyloxyl group, hydroxyl group, or O.Cat (Cat = inorganic or organic cation) or SR''(R'' = an alkyl group), and a carbamate derivative having the formula

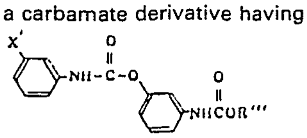

(II)

wherein R''' represents methyl or ethyl group; X' represents hydrogen atom or methyl group as active ingredients.

EP 0 010 232 A1

Croydon Printing Company Ltd

COMPLETE DOCUMENT

## BACKGROUND OF THE INVENTION:

The present invention relates to a herbicidal composition in which two active ingredients impart synergistic effect.

Recently, many herbicides have been proposed and practically used to contribute to elimination of agricultural labour works.

Thus, various problems on herbicidal effects and safety of the herbicides have been found in the practical applications.

It has been awaited to find improved herbicides which have no adverse effect to the object plants and effective to noxious weeds in a small dose of the active ingredient and significantly safe without any environmental pollution.

## SUMMARY OF THE INVENTION:

It is an object of the present invention to provide a herbicidal composition which has excellent herbicidal effect and safety and which is especially effective to control weeds without phytotoxicity to beet.

The herbicidal composition of the present invention comprises a phenoxypentenoic acid derivative having the formula

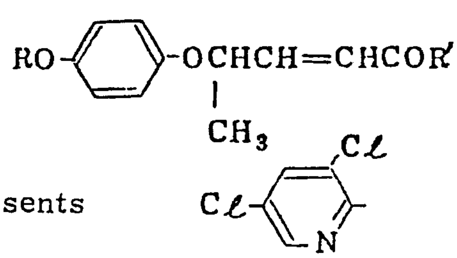

(I)

wherein R represents or 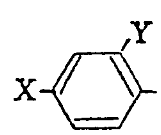

and X represents a halogen atom or trifluoromethyl group; Y represents hydrogen atom or chlorine atom; R' represents an alkoxyl group, an alkenyloxyl group, hydroxyl group or O· Cat. (Cat=inorganic or organic cation) or SR'' (R''=an alkyl group) and a carbamate derivative having the formula

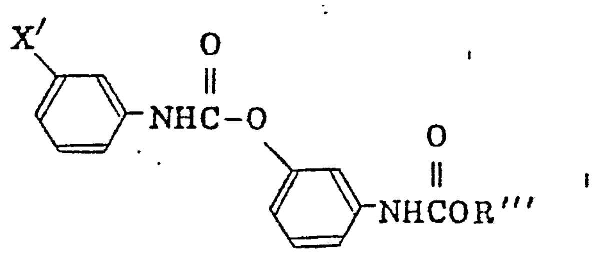

(II)

wherein R''' represents methyl or ethyl group; X' represents hydrogen atom or methyl group as active ingredients with a carrier.

## DETAILED DESCRIPTION OF THE PREFERRED EMBODIMENTS:

The phenoxypentenoic acid derivatives (I) used in the present invention have no phytotoxicity to broad-leaf weeds and are safe to broad leaf crop plants such as radish, soy bean, peanut, cotton, flax, beet, pimento and sunflower but are remarkably effective as herbicides to gramineous weeds such as barnyard grass, large crab grass, johnson grass, maize, quack grass, dent foxtail, and paspalum grass though they are less effective to annual bluegrass.

On the other hand, the carbamate derivatives used in the present invention are substantially not effective as herbicides to gramineous weeds but are remarkably effective as herbicides to broad-leaf weeds though they are less effective to green amaranth in Amaranthaceae and grown broad-leaf weed in high leaf stage such as pale smartweed in Polygonaceae and has no phytotoxicity to beet in Chenopodiaceae.

The herbicidal compositions of the present invention have the advantageous characteristic to maintain longer herbicidal effect than those of the application of each single component.

The herbicidal compositions of the present invention have surprisingly unexpected high synergistic effect to broad-leaf weeds and gramineous weeds and a dose of the herbicides can be remarkably decreased.

An absorption of the carbamate derivative into plants is improved by combining the phenoxypentenoic acid derivative with the carbamate derivative.

Therefore, it is possible to completely control broad-leaf weed in high leaf stage such as pale smartweed in Polygonaceae and also green amaranth in Amaranthaceae and annual bluegrass in Gramineae which have not been effectively controlled by the conventional herbicides.

Therefore, it is possible to completely control grown broad-leaf weeds in high leaf stage such as pale smartweed which have not been effectively controlled. Moreover, the herbicidal compositions are effective to pale smartweed and annual bluegrass which could not be controlled by either of these herbicidal active ingredient. Thus, regeneration of weeds can be prevented by applying the herbicidal composition of the present invention. The herbicidal composition of the present invention can completely control broad-leaf weeds and gramineous weeds without phytotoxicity to beet.

Suitable phenoxypentenoic acid derivatives having the formula (I) used in the herbicidal composition of the present invention include 4-[4-(4-trifluoromethylphenoxy]-(2)-pentenoic acid; its esters such as methyl, ethyl, n-propyl, isopropyl, n-butyl, isobutyl, sec-butyl, t-butyl, n-amyl, iso-amyl, n-octyl or allyl esters; its salts such as sodium, potassium, zinc, iron, ammonium, methylamine or dimethylamine salt; its thiol esters such as methyl, ethyl, n-propyl,

iso-propyl, n-butyl, iso-butyl, sec-butyl or t-butyl thiol esters; 4-[4-(4-bromophenoxy phenoxy]-(2)-pentenoic acid and its esters such as methyl, ethyl or iso-propyl esters; 4-[4-(4-iodophenoxy)-phenoxy]-(2)-pentenoic acid and its esters such as methyl, ethyl or iso-propyl esters; 4-[4-(2,4-dichlorophenoxy)phenoxy]-(2)-pentenoic acid and its esters such as ethyl or iso-propyl esters; 4-[4-(2-chloro-4-trifluoromethylphenoxy)phenoxy]-(2)-pentenoic acid and its esters such as methyl, ethyl iso-propyl, n-butyl or allyl esters; 4-[4-(2-bromo-4-trifluoromethylphenoxy)phenoxy]-(2)-pentenoic acid and its esters such as ethyl ester; 4-[4-(2-chloro-4-bromophenoxy)-phenoxy]-(2)-pentenoic acid and its esters such as methyl ethyl, iso-propyl or allyl esters; 4-[4-(3,5-dichloropyridyl-2-oxy)phenoxy]-(2)-pentenoic acid and its esters such as methyl, ethyl, n-propyl, iso-propyl, n-butyl, iso-butyl, sec-butyl, t-butyl or allyl esters; or its salts such as sodium or diethylamine salts; its thiol esters such as methyl or ethyl thiol esters.

Suitable carbamate derivatives having the formula II used in the herbicidal compositions of the present invention include 3-[(methoxycarbonyl)amino]phenyl N-(3'-methylphenyl)carbamate and 3-[(ethoxycarbonyl)amino]phenyl-N-phenyl carbamate.

In the combination of the compound (I) and the compound (II), the optimum herbicidal effect can be expected by using the compound (I) wherein R' is an alkoxy group especially a $C_{1-4}$ alkoxy group and R is 4-trifluoromethylphenyl group or 3,5-dichloropyridyl group especially 4-trifluoromethylphenyl group; and the compound (II) wherein X' and R''' are respectively methyl group.

The dose of the active ingredient of the compound of the present invention depends upon weather condition, soil condition, form of the composition, season of the application and method of the application and kinds of crop plants and kinds of weeds

and growth stage of weeds and it is usually in a range of 0.2 to 10 kg preferably 0.2 to 6 kg especially 0.5 to 4 kg per 1 hectare in the foliage treatment and it is usually applied in a concentration of 10 to 10,000 ppm preferable 100 to 5,000 ppm especially 250 to 3,000 ppm of the active ingredient.

When the compound of the present invention is used as the herbicide, the compound can be used in the original form and also in the form of compositions such as granules, wettable powder, dusts, emulsifiable concentrates, fine powder, floables, suspensions, etc. to impart superior effect.

In the preparation of the herbicidal compositions, the active ingredients (I), (II) of the present invention can be uniformly mixed with or dissolved in suitable adjuvants such as solid carrier such as talc, bentonite, clay, kaolin, diatomaceous earth, silica gel, vermiculite, lime, siliceous sand, ammonium sulfate or urea; liquid carriers such as alcohols, dioxane, acetone, cyclohexanone, methyl naphthalene or dimethylformamide; surfactants as emulsifiers dispersing agents or wetting agents such as alkyl sulfate, alkylsulfonate, polyoxyethyleneglycol ethers, polyoxyethylenealkylaryl ethers such as polyoxyethylenenonylphenol ether or polyoxyethylenesorbitane monoalkylate; and carboxymethyl cellulose, gum arabic and other adjuvants.

A ratio of the phenoxypentenoic acid derivative (I) to the carbamate derivative (II) is usually 1 : 0.2 to 10 preferably 1 : 0.4 to 5 especially 1 : 0.5 to 2 by weight to impart the synergistic effect. The active ingredients (I), (II) are usually incorporated in the herbicidal composition of the present invention at a ratio of 0.5 to 95% by weight.

The amounts of the active ingredients, adjuvants and additives in the herbicidal compositions of the present invention will be further illustrated.

Wettable powder:

| | | |
|---|---|---|
| Active ingredient: | 5 to 95 wt.% | preferably 20 to 50 wt.% |
| Surfactant : | 1 to 20 wt.% | preferably 5 to 10 wt.% |
| Solid carrier : | 5 to 85 wt.% | preferably 40 to 70 wt.% |

The active ingredient is admixed with the solid carrier and the surfactant and the mixture is pulverized.

Emulsifiable concentrate:

| | | |
|---|---|---|
| Active in gredient: | 5 to 95 wt.% | preferably 20 to 70 wt.% |
| Surfactant : | 1 to 40 wt.% | preferably 5 to 20 wt.% |
| Liquid carrier : | 5 to 90 wt.% | preferably 30 to 60 wt.% |

The active ingredient is dissolved in the liquid carrier and the surfactant is admixed.

Dust:

| | | |
|---|---|---|
| Active ingredient: | 0.5 to 10 wt.% | preferably 1 to 5 wt.% |
| Solid carrier : | 99.5 to 90 wt.% | preferably 99 to 95 wt.% |

The active ingredient is mixed with fine solid carrier and the mixture is pulverized.

Granule:

Active ingredient: 0.5 to 40 wt. % preferably 2 to 10 wt. %

Solid carrier: 99.5 to 60 wt. % preferably 98 to 90 wt. %

The active ingredient is sprayed on the solid carrier or further coated with the solid carrier to form the granule.

The other herbicides can be incorporated in the herbicidal composition of the present invention.

Certain examples of the preparations of the herbicidal compositions will be illustrated, however, the kinds and the ratio of the adjuvants are not limited and can be varied from the conventional consideration of the herbicidal compositions.

The compounds used in the examples will be shown by the following compound numbers.

Compound (1)

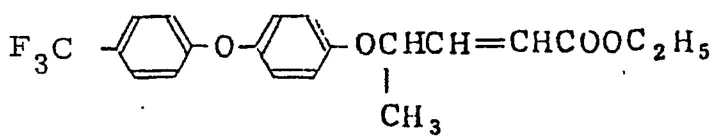

Compound (2)

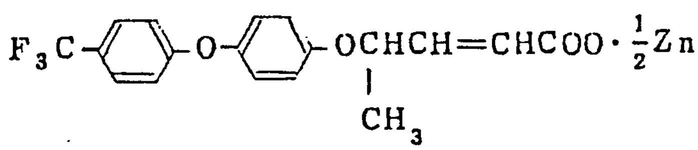

Compound (3)

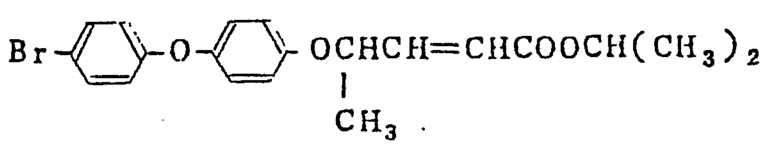

Compound (4)

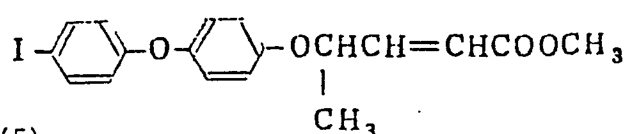

Compound (5)

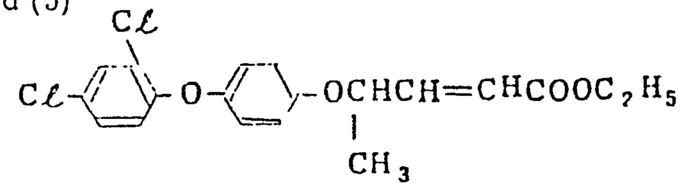

Compound (6)

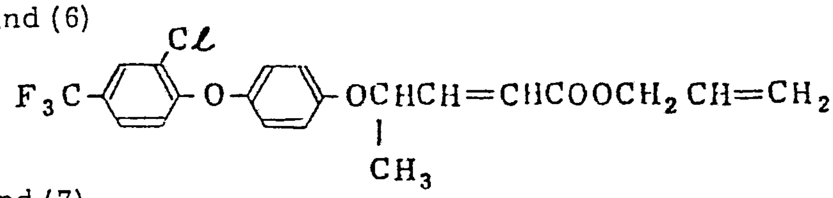

Compound (7)

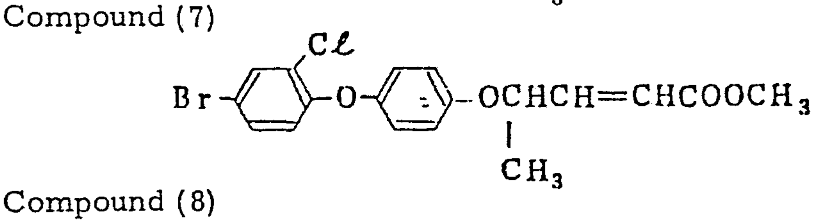

Compound (8)

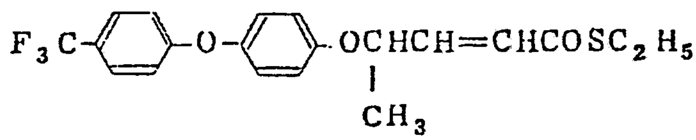

Compound (9)

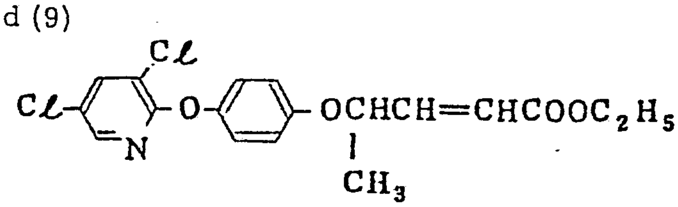

Compound (10)

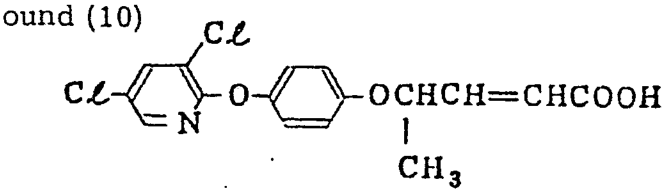

Compound (11)

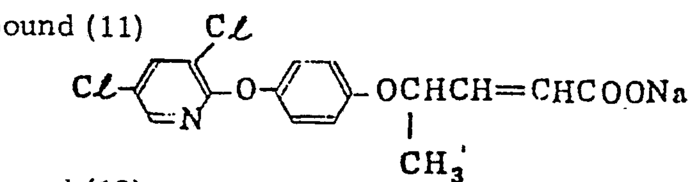

Compound (12)

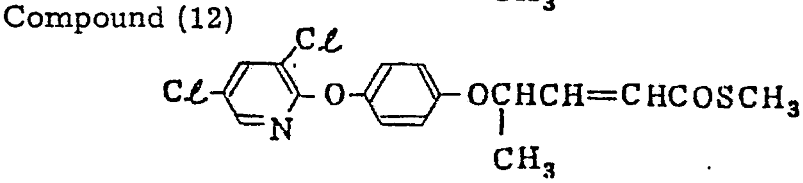

Compound (13)

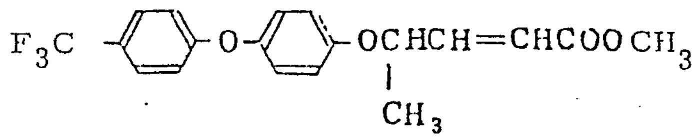

Compound (14)

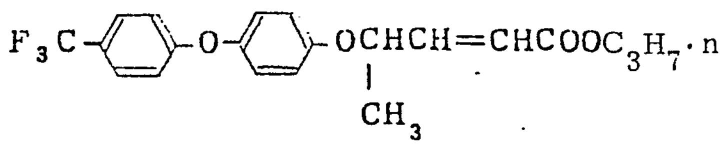

Compound (15)

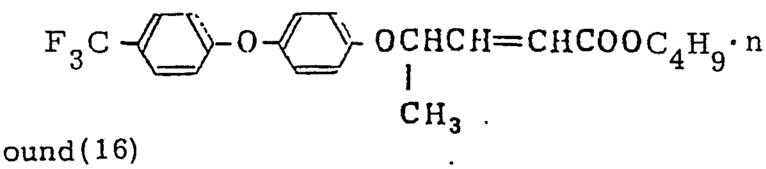

Compound (16)

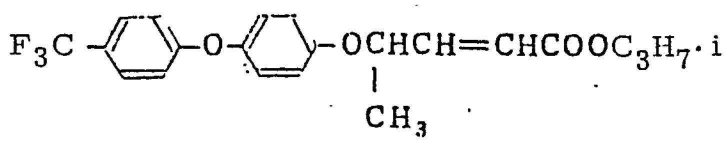

Compound (A)

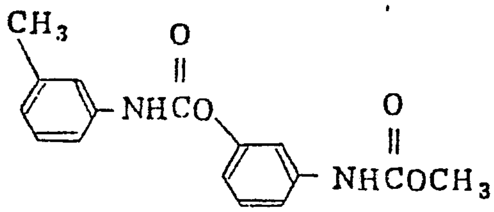

Compound (B)

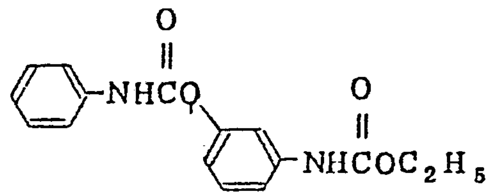

Composition No. 1: Wettable powder;

| | |
|---|---|
| Compound (1) | 20 wt. % |
| Compound (A) | 40 wt. % |
| Sodium alkylbenzenesulfonate | 2 wt. % |
| Polyvinyl alcohol | 3 wt. % |
| White carbon | 15 wt. % |
| Fine clay | 20 wt. % |

These components were uniformly mixed and pulverized to prepare a wettable powder.

Composition No. 2: Wettable powder;

| | |
|---|---|
| Compound (10) | 30 wt. % |
| Compound (A) | 30 wt. % |
| Sodium alkylbenzenesulfonate | 2 wt. % |
| Polyvinyl alcohol | 3 wt. % |
| White carbon | 20 wt. % |
| Diatomaceous earth | 15 wt. % |

These components were uniformly mixed and pulverized to prepare a wettable powder.

Composition No. 3: Wettable powder;

| | |
|---|---|
| Compound (6) | 40 wt. % |
| Compound (B) | 20 wt. % |
| Sodium alkylbenzenesulfonate | 3 wt. % |
| Polyvinyl alcohol | 3 wt. % |
| White carbon | 24 wt. % |
| Diatomaceous earth | 10 wt. % |

These components were uniformly mixed and pulverized to prepare a wettable powder.

Composition No. 4: Emulsifiable concentrate;

| | |
|---|---|
| Compound (9) | 7.5 wt. % |
| Compound (A) | 15 wt. % |
| Polyoxyethylenealkylaryl ether | 5 wt. % |
| Sodium alkylarylsulfonate | 5 wt. % |
| Cyclohexanone | 67.5 wt. % |

These components were uniformly mixed to prepare an emulsifiable concentrate.

Composition No. 5: Emulsifiable concentrate;

| | |
|---|---|
| Compound (3) | 15 wt. % |
| Compound (B) | 15 wt. % |
| Polyoxyethylenealkylaryl ether | 5 wt. % |
| Sodium alkylarylsulfonate | 5 wt. % |
| Cyclohexanone | 60 wt. % |

These components were uniformly mixed to prepare an emulsifiable concentrate.

Composition No. 6: Emulsifiable concentrate;

| | |
|---|---|
| Compound (8) | 20 wt. % |
| Compound (A) | 10 wt. % |
| Polyoxyethylenealkylaryl ether | 6 wt. % |
| Sodium alkylarylsulfonate | 4 wt. % |
| Cyclohexanone | 60 wt. % |

These components were uniformly mixed to prepare an emulsifiable concentrate.

Composition No. 7: Granules;

| | |
|---|---|
| Compound (5) | 3 wt. % |
| Compound (B) | 6 wt. % |
| Polyvinyl alcohol | 2 wt. % |
| Diatomaceous earth | 10 wt. % |
| Clay | 79 wt. % |

These components were uniformly mixed and pulverized and then kneaded with water and granulated and dried to prepare granules.

Composition No. 8: Granules;

| | |
|---|---|
| Compound (11) | 5 wt. % |
| Compound (A) | 5 wt. % |
| Polyvinyl alcohol | 2 wt. % |
| Diatomaceous earth | 15 wt. % |
| Clay | 73 wt. % |

These components were uniformly mixed and pulverized and then kneaded with water and granulated and dried to prepare granules.

Composition No. 9: Granules;

| | |
|---|---|
| Compound (4) | 6 wt. % |
| Compound (A) | 3 wt. % |
| Polyvinyl alcohol | 2 wt. % |
| Diatomaceous earth | 15 wt. % |
| Clay | 74 wt. % |

These components were uniformly mixed and pulverized and then kneaded with water and granulated and dried to prepare granules.

Composition No. 10: Dust;

| | |
|---|---|
| Compound (7) | 1 wt. % |
| Compound (A) | 2 wt. % |
| White carbon | 0.5 wt. % |
| Clay | 86.5 wt. % |

These components were mixed and pulverized to prepare a dust.

Composition No. 11: Dust;

| | |
|---|---|
| Compound (12) | 1 wt. % |
| Compound (A) | 1 wt. % |
| White carbon | 0.5 wt. % |
| Clay | 97.5 wt. % |

These components were uniformly mixed and pulverized to prepare a dust.

The herbicidal activity of the compounds of the present invention will be further illustrated by certain experimental tests.

Experiment 1:

Test for crop plant and up-land weed in foliage treatment:

Each polyethylene pot of 2,000 $cm^2$ (50 x 40 x 20 cm) filled with up-land soil and seeds of beet, barnyard grass, large crab grass annual bluegrass, pale smartweed, green amaranth and chickweed (25 seeds of each plant) were sown.

Each emulsifiable concentrate prepared in accordance with the method of Composition No. 1 was diluted with water to give the specific concentrations of the active ingredients. When beet as the crop plant was grown to 2.5 to 3 leaf stage, each diluted solution was uniformly sprayed at a rate of 750 liter/ha.

Twenty one days after the treatment, the survival quantities of the plants were measured and the survival percents of the survival quantity in the treated pot to that in the non-treated pot were calculated by the following equation:

$$\text{Survival percent (\%)} = \frac{\text{Survival plant weight in treated pot (g)}}{\text{Survival plant weight in non-treated pot (g)}} \times 100$$

The results are shown in Table 1.

B.G.: barnyard grass
Cr.G.: large crab grass
A.B.: annual blue grass
P.S.: pale smartweed
G.A.: green amaranth
C.W.: chickweed
Beet

Table 1

Foliage Treatment (Pot Test)

| Comp. | Dose active ingredient (kg/ha) | Test Plants (survival percent (%)) | | | | | | |
|---|---|---|---|---|---|---|---|---|
| | | Gramineous weeds | | | Broad leaf weeds | | | Crop |
| | | B.G. | Cr.G. | A.B. | P.S. | G.A. | C.W. | Beet |
| | | 4-5 l.s. | 3.5-5 l.s. | 4-5 l.s. | 2-3 l.s. | 2-3 l.s. | 2-3 l.s. | 2.5-3 l.s. |
| Comp. (1) | 1 | 0 | 0 | 15.8 | 100 | 100 | 100 | 100 |
| | 0.5 | 0 | 0 | 28.9 | 100 | 100 | 100 | 100 |
| Comp. (2) | 1 | 0 | 0 | 17.2 | 100 | 100 | 100 | 100 |
| | 0.5 | 0 | 0 | 31.4 | 100 | 100 | 100 | 100 |
| Comp. (3) | 1 | 0 | 0 | 16.7 | 100 | 100 | 100 | 100 |
| | 0.5 | 0 | 0 | 30.3 | 100 | 100 | 100 | 100 |
| Comp. (4) | 1 | 0 | 0 | 15.9 | 100 | 100 | 100 | 100 |
| | 0.5 | 0 | 0 | 29.6 | 100 | 100 | 100 | 100 |
| Comp. (5) | 1 | 0 | 0 | 32.2 | 100 | 100 | 100 | 100 |
| | 0.5 | 0 | 0 | 32.2 | 100 | 100 | 100 | 100 |
| Comp. (6) | 1 | 0 | 0 | 16.8 | 100 | 100 | 100 | 100 |
| | 0.5 | 0 | 0 | 30.7 | 100 | 100 | 100 | 100 |
| Comp. (7) | 1 | 0 | 0 | 17.5 | 100 | 100 | 100 | 100 |
| | 0.5 | 0 | 0 | 32.9 | 100 | 100 | 100 | 100 |
| Comp. (8) | 1 | 0 | 0 | 16.3 | 100 | 100 | 100 | 100 |
| | 0.5 | 0 | 0 | 30.1 | 100 | 100 | 100 | 100 |
| Comp. (9) | 1 | 0 | 0 | 14.9 | 100 | 100 | 100 | 100 |
| | 0.5 | 0 | 0 | 28.2 | 100 | 100 | 100 | 100 |
| Comp. (10) | 1 | 0 | 0 | 16.1 | 100 | 100 | 100 | 100 |
| | 0.5 | 0 | 0 | 30.5 | 100 | 100 | 100 | 100 |
| Comp. (11) | 1 | 0 | 0 | 15.9 | 100 | 100 | 100 | 100 |
| | 0.5 | 0 | 0 | 29.7 | 100 | 100 | 100 | 100 |
| Comp. (12) | 1 | 0 | 0 | 16.4 | 100 | 100 | 100 | 100 |
| | 0.5 | 0 | 0 | 30.3 | 100 | 100 | 100 | 100 |
| Comp. (A) | 2 | 73.0 | 83.4 | 91.4 | 0 | 5.6 | 0 | 94.2 |
| | 1 | 85.6 | 90 | 97.2 | 18.2 | 32.7 | 0 | 100 |
| | 0.5 | 100 | 100 | 100 | 31.1 | 54.8 | 4.6 | 100 |
| Comp. (B) | 2 | 71.1 | 82.5 | 93.8 | 8.9 | 0 | 0 | 93.7 |
| | 1 | 83.9 | 89.2 | 98.3 | 30.2 | 19.3 | 0 | 100 |
| | 0.5 | 100 | 100 | 100 | 50.3 | 32.5 | 5.3 | 100 |

Table 1 (cont'd)

| Comp. | Dose active ingre-dient (kg/ha) | Test Plants (survival percent (%)) | | | | | | |
|---|---|---|---|---|---|---|---|---|
| | | Gramineous weeds | | | Broad leaf weeds | | | Crop |
| | | B.G. | Cr.G. | A.B. | P.S. | G.A. | C.W. | Beet |
| | | 4-5 l.s. | 3.5-5 l.s. | 4-5 l.s. | 2-3 l.s. | 2-3 l.s. | 2-3 l.s. | 2.5-3 l.s. |
| Com(1)<br>Com(A) | 0.5<br>1 | 0 | 0 | 0 | 0 | 0 | 0 | 100 |
| Com(2)<br>Com(A) | 0.5<br>1 | 0 | 0 | 0 | 0 | 0 | 0 | 100 |
| Com(3)<br>Com(A) | 0.5<br>1 | 0 | 0 | 0 | 0 | 0 | 0 | 100 |
| Com(4)<br>Com(A) | 0.5<br>1 | 0 | 0 | 0 | 0 | 0 | 0 | 100 |
| Com(5)<br>Com(A) | 0.5<br>1 | 0 | 0 | 0 | 0 | 0 | 0 | 100 |
| Com(6)<br>Com(A) | 0.5<br>0 | 0 | 0 | 0 | 0 | 0 | 0 | 100 |
| Com(7)<br>Com(A) | 0.5<br>1 | 0 | 0 | 0 | 0 | 0 | 0 | 100 |
| Com(8)<br>Com(A) | 0.5<br>1 | 0 | 0 | 0 | 0 | 0 | 0 | 100 |
| Com(9)<br>Com(A) | 0.5<br>1 | 0 | 0 | 0 | 0 | 0 | 0 | 100 |
| Com(10<br>Com(A) | 0.5<br>1 | 0 | 0 | 0 | 0 | 0 | 0 | 100 |
| Com(11<br>Com(A) | 0.5<br>1 | 0 | 0 | 0 | 0 | 0 | 0 | 100 |
| Com(12<br>Com(A) | 0.5<br>1 | 0 | 0 | 0 | 0 | 0 | 0 | 100 |
| Com(1)<br>Com(B) | 0.5<br>1 | 0 | 0 | 0 | 0 | 0 | 0 | 100 |
| Com(2)<br>Com(B) | 0.5<br>1 | 0 | 0 | 0 | 0 | 0 | 0 | 100 |
| Com(3)<br>Com(B) | 0.5<br>1 | 0 | 0 | 0 | 0 | 0 | 0 | 100 |
| Com(4)<br>Com(B) | 0.5<br>1 | 0 | 0 | 0 | 0 | 0 | 0 | 100 |
| Com(5)<br>Com(B) | 0.5<br>1 | 0 | 0 | 0 | 0 | 0 | 0 | 100 |
| Com(6)<br>Com(B) | 0.5<br>1 | 0 | 0 | 0 | 0 | 0 | 0 | 100 |

Table 1 (cont'd)

| Comp. | Dose active ingre-dient (kg/ha) | Test Plants (survival percent (%)) | | | | | | |
|---|---|---|---|---|---|---|---|---|
| | | Gramineous weeds | | | Broad leaf weeds | | | Crop |
| | | B. G. | Cr.G. | A. B. | P. S. | G. A. | C.W. | Beet |
| | | 4-5 l. s. | 3.5-5 l. s. | 4-5 l. s. | 2-3 l. s. | 2-3 l. s. | 2-3 l. s. | 2.5-3 l. s. |
| Com(7)<br>Com(B) | 0.5<br>1 | 0 | 0 | 0 | 0 | 0 | 0 | 100 |
| Com(8)<br>Com(B) | 0.5<br>1 | 0 | 0 | 0 | 0 | 0 | 0 | 100 |
| Com(9)<br>Com(B) | 0.5<br>1 | 0 | 0 | 0 | 0 | 0 | 0 | 100 |
| Com(10)<br>Com(B) | 0.5<br>1 | 0 | 0 | 0 | 0 | 0 | 0 | 100 |
| Com(11)<br>Com(B) | 0.5<br>1 | 0 | 0 | 0 | 0 | 0 | 0 | 100 |
| Com(12)<br>Com(B) | 0.5<br>1 | 0 | 0 | 0 | 0 | 0 | 0 | 100 |
| Comp. (13) | 1<br>0.5 | 0<br>0 | 0<br>0 | 15.0<br>27.3 | 100<br>100 | 100<br>100 | 100<br>100 | 100<br>100 |
| Comp. (14) | 1<br>0.5 | 0<br>0 | 0<br>0 | 16.7<br>30.0 | 100<br>100 | 100<br>100 | 100<br>100 | 100<br>100 |
| Comp. (15) | 1<br>0.5 | 0<br>0 | 0<br>0 | 17.9<br>32.2 | 100<br>100 | 100<br>100 | 100<br>100 | 100<br>100 |
| Comp. (16) | 1<br>0.5 | 0<br>0 | 0<br>0 | 17.7<br>31.3 | 100<br>100 | 100<br>100 | 100<br>100 | 100<br>100 |
| Com(13)<br>Com(A) | 1<br>0.5 | 0<br>0 | 0<br>0 | 0<br>0 | 0<br>0 | 0<br>0 | 0<br>0 | 100<br>100 |
| Com(14)<br>Com(A) | 1<br>0.5 | 0<br>0 | 0<br>0 | 0<br>0 | 0<br>0 | 0<br>0 | 0<br>0 | 100<br>100 |
| Com(15)<br>Com(A) | 1<br>0.5 | 0<br>0 | 0<br>0 | 0<br>0 | 0<br>0 | 0<br>0 | 0<br>0 | 100<br>100 |
| Com(16)<br>Com(A) | 1<br>0.5 | 0<br>0 | 0<br>0 | 0<br>0 | 0<br>0 | 0<br>0 | 0<br>0 | 100<br>100 |
| Non-treat | - | 100 | 100 | 100 | 100 | 100 | 100 | 100 |

Experiment 2:

Test for crop plant and up-land weed in foliage treatment.

Each polyethylene pot of 2,000 $cm^2$ (50 x 40 x 20 cm) filled with up-land soil and seeds of beet, barnyard grass, large crab grass annual blue grass, pale smartweed, green amaranth and chickweed (25 seeds of each plant) were sown.

Each emulsifiable concentrate prepared in accordance with the method of Composition No. 1 was diluted with water to give the specific concentrations of the active ingredients. When beet as the crop plant was grown to 2.5 to 3 leaf stage, each diluted solution was uniformly sprayed at a rate of 750 liter/ha.

Twenty one days after the treatment, the survival quantities of the plants were measured and the survival percents of the survival quantity in the treated pot to that in the non-treated pot were calculated by the following equation:

$$\text{Survival Percent } (\%) = \frac{\text{Survival plant weight in treated pot (g)}}{\text{Survival plant weight in non-treated pot (g)}} \times 100$$

The results are shown in Table 2.

Table 2

Foliage Treatment (Pot Test)

| Comp. | Dose active ingre-dient (kg/ha) | Test Plants (survival percent (%)) | | | | | | |
|---|---|---|---|---|---|---|---|---|
| | | Gramineous weeds | | | Broad leaf weeds | | | Crop |
| | | B.G. | Cr.G. | A.B. | P.S. | G.A. | C.W. | Beet |
| | | 4-5 l.s. | 3.5-5 l.s. | 4-5 l.s. | 2-3 l.s. | 2-3 l.s. | 2-3 l.s. | 2.5-3 l.s. |
| Com(1) | 1 | 0 | 0 | 15.4 | 100 | 100 | 100 | 100 |
| | 0.5 | 0 | 0 | 28.7 | 100 | 100 | 100 | 100 |
| Com(6) | 1 | 0 | 0 | 16.3 | 100 | 100 | 100 | 100 |
| | 0.5 | 0 | 0 | 30.7 | 100 | 100 | 100 | 100 |
| Com(9) | 1 | 0 | 0 | 14.8 | 100 | 100 | 100 | 100 |
| | 0.5 | 0 | 0 | 28.4 | 100 | 100 | 100 | 100 |
| Com(10) | 1 | 0 | 0 | 16.5 | 100 | 100 | 100 | 100 |
| | 0.5 | 0 | 0 | 30.2 | 100 | 100 | 100 | 100 |
| Com(A) | 1 | 86.5 | 90.5 | 98.1 | 18.4 | 32.1 | 0 | 100 |
| | 0.5 | 100 | 100 | 100 | 32.2 | 58.7 | 4.3 | 100 |
| | 0.25 | 100 | 100 | 100 | 56.1 | 84.5 | 10.3 | 100 |
| Com(B) | 1 | 85.9 | 90.2 | 99.2 | 33.5 | 19.4 | 0 | 100 |
| | 0.5 | 100 | 100 | 100 | 57.9 | 32.1 | 5.1 | 100 |
| | 0.25 | 100 | 100 | 100 | 83.3 | 57.2 | 11.5 | 100 |
| Com(1)<br>Com(A) | 0.5<br>0.5 | 0 | 0 | 0 | 0 | 0.7 | 0 | 100 |
| Com(6)<br>Com(A) | 0.5<br>0.5 | 0 | 0 | 0 | 0 | 1.1 | 0 | 100 |
| Com(9)<br>Com(A) | 0.5<br>0.5 | 0 | 0 | 0 | 0 | 0.6 | 0 | 100 |
| Com(10)<br>Com(A) | 0.5<br>0.5 | 0 | 0 | 0 | 0 | 0.8 | 0 | 100 |
| Com(1)<br>Com(A) | 0.5<br>0.25 | 0 | 0 | 0 | 0 | 1.2 | 0 | 100 |
| Com(6)<br>Com(A) | 0.5<br>0.25 | 0 | 0 | 0 | 0 | 1.6 | 0 | 100 |
| Com(9)<br>Com(A) | 0.5<br>0.25 | 0 | 0 | 0 | 0 | 1.3 | 0 | 100 |
| Com(10)<br>Com(A) | 0.5<br>0.25 | 0 | 0 | 0 | 0 | 1.3 | 0 | 100 |
| Com(1)<br>Com(B) | 0.5<br>0.5 | 0 | 0 | 0 | 0.6 | 0 | 0 | 100 |
| Com(6)<br>Com(B) | 0.5<br>0.5 | 0 | 0 | 0 | 1.0 | 0 | 0 | 100 |
| Com(9)<br>Com(B) | 0.5<br>0.5 | 0 | 0 | 0 | 0.5 | 0 | 0 | 100 |

Table 2 (cont'd)

| Comp. | Dose active ingre-dient (kg/ha) | Test Plants (survival percent (%)) | | | | | | |
|---|---|---|---|---|---|---|---|---|
| | | Gramineous weeds | | | Broad leaf weeds | | | Crop |
| | | B.G. | Cr.G. | A.B. | P.S. | G.A. | C.W. | Beet |
| | | 4-5 l.s. | 3.5-5 l.s. | 4-5 l.s. | 2-3 l.s. | 2-3 l.s. | 2-3 l.s. | 2.5-3 l.s. |
| Com(10)<br>Com(B) | 0.5<br>0.5 | 0 | 0 | 0 | 0.7 | 0 | 0 | 100 |
| Com(1)<br>Com(B) | 0.5<br>0.25 | 0 | 0 | 0 | 1.1 | 0 | 0 | 100 |
| Com(6)<br>Com(B) | 0.5<br>0.25 | 0 | 0 | 0 | 1.5 | 0 | 0 | 100 |
| Com(9)<br>Com(B) | 0.5<br>0.25 | 0 | 0 | 0 | 1.0 | 0 | 0 | 100 |
| Com(10)<br>Com(B) | 0.5<br>0.25 | 0 | 0 | 0 | 1.2 | 0 | 0 | 100 |
| Non-treat | - | 100 | 100 | 100 | 100 | 100 | 100 | 100 |

Experiment 3:

Test for up-land weed in different leaf stage in foliage treatment:

Each polyethylene pot of 500 $cm^2$ (25 x 20 x 15 cm) filled with up-land soil and seeds of pale smartweed were sown at a rate of 30 seeds per pot.

When the weed was grown to 0.5 - 1.5 leaf stage, 2 - 3 leaf stage, 4 - 5 leaf stage or 5 - 6 leaf stage, each emulsifiable concentrate prepared in accordance with the method of Composition No. 4, No. 5 or No. 6 was diluted with water to give the specific concentrations of the compounds and the diluted solution was uniformly sprayed at a rate of 750 liter/ha.

Twenty-one daysafter the treatment, the survival quantities of the plants were measured and the survival percents of the survival quantity in the treated pot to that in the non-treated pot were calculated by the following equation:

$$\text{Survival percent (\%)} = \frac{\text{Survival plant weight in treated pot (g)}}{\text{Survival plant weight in non-treated pot (g)}} \times 100$$

The results are shown in Table 3.

Table 3

Test for weed in different leaf stages in foliage treatment (pot test)

| Compound No. | Dose active ingre- dients (kg/ha) | Survival percent of pale smartweed (%) | | | |
|---|---|---|---|---|---|
| | | 0.5-1.5 leaf stage | 2 - 3 leaf stage | 4 - 5 leaf stage | 5 - 6 leaf stage |
| Comp. (1) | 1 | 100 | 100 | 100 | 100 |
| | 0.5 | 100 | 100 | 100 | 100 |
| Comp. (9) | 1 | 100 | 100 | 100 | 100 |
| | 0.5 | 100 | 100 | 100 | 100 |
| Comp. (A) | 2 | 0 | 0 | 13.8 | 26.0 |
| | 1 | 0 | 14.2 | 22.4 | 30.4 |
| | 0.5 | 5.3 | 31.2 | 55.5 | 86.3 |
| | 0.25 | 10.5 | 50.2 | 71.1 | 97.4 |
| Comp. (B) | 2 | 0 | 8.9 | 23.2 | 35.6 |
| | 1 | 4.4 | 30.3 | 52.7 | 72.0 |
| | 0.5 | 12.9 | 51.7 | 81.8 | 98.5 |
| | 0.25 | 24.1 | 73.0 | 92.9 | 100 |
| Comp. (1)<br>Comp. (A) | 0.5<br>1 | 0 | 0 | 0 | 2.6 |
| Comp. (9)<br>Comp. (A) | 0.5<br>1 | 0 | 0 | 0 | 2.4 |
| Comp. (1)<br>Comp. (A) | 0.5<br>0.5 | 0 | 0 | 2.1 | 4.2 |
| Comp. (9)<br>Comp. (A) | 0.5<br>0.5 | 0 | 0 | 1.9 | 5.8 |
| Comp. (1)<br>Comp. (A) | 0.5<br>0.25 | 0 | 0 | 2.4 | 7.2 |
| Comp. (9)<br>Comp. (A) | 0.5<br>0.25 | 0 | 0 | 2.6 | 7.4 |
| Comp. (1)<br>Comp. (B) | 0.5<br>1 | 0 | 0.8 | 2.5 | 6.1 |
| Comp. (9)<br>Comp. (B) | 0.5<br>1 | 0 | 0.9 | 2.7 | 6.7 |
| Comp. (1)<br>Comp. (B) | 0.5<br>0.5 | 0 | 2.3 | 4.7 | 11.5 |

Table 3 ( cont'd)

Test for weed in different leaf stages in foliage treatment (pot test)

| Compound No. | Dose active ingre- dients (kg/ha) | Survival percent of pale smartweed (%) | | | |
|---|---|---|---|---|---|
| | | 0.5-1.5 leaf stage | 2 - 3 leaf stage | 4 - 5 leaf stage | 5 - 6 leaf stage |
| Comp. (9)<br>Comp. (B) | 0.5<br>0.5 | 0 | 2.1 | 5.1 | 10.2 |
| Comp. (1)<br>Comp. (B) | 0.5<br>0.25 | 0 | 3.9 | 5.7 | 14.1 |
| Comp. (9)<br>Comp. (B) | 0.5<br>0.25 | 0 | 3.8 | 6.1 | 13.9 |
| Non-treat | - | 100 | 100 | 100 | 100 |

Experiment 4:

Test for crop plants and up-land weeds in foliage treatment:

The up-land field in Yokochi Kikukawa-cho, Ogasawara-gun Shizuoka-ken was divided into each section of 10 $m^2$ (5 m x 2 m). The tests were carried out in two replicates. Seeds of beet as a crop plant were sown. When the beet was grown to 5 - 7 leaf stage, each emulsifiable concentrate prepared in accordance with the method of Composition No. 4, No. 5 or No. 6 was diluted with water to give the specific concentrations of the compounds and the diluted solution was uniformly sprayed at a rate of 750 liter/ha.

Thirty days after the treatment, the survival quantities of the plants were measured and the survival percents of the survival quantity in the treated zone to that in the non-treated zone were calculated by the following equation.

$$\text{Survival percent (\%)} = \frac{\text{Survival plant weight in treated zone (g)}}{\text{Survival plant weight in non-treated zone (g)}} \times 100$$

The results are shown in Table 4.

Table 4

Test in up-land field in foliage treatment

| Comp. | Dose active ingre-dient (kg/ha) | Test Plants (survival percent (%)) | | | | | | |
|---|---|---|---|---|---|---|---|---|
| | | Gramineous weeds | | | Broad leaf weeds | | | Crop |
| | | B.G. | Cr.G. | A.B. | P.S. | G.A. | C.W. | Beet |
| | | 4-5 l.s. | 3.5-5 l.s. | 4-5 l.s. | 2-3 l.s. | 2-3 l.s. | 2-3 l.s. | 2.5-3 l.s. |
| Com(1) | 1 | 0 | 0 | 0 | 100 | 100 | 100 | 100 |
| | 0.5 | 0 | 0 | 0 | 100 | 100 | 100 | 100 |
| Com(A) | 2 | 84.1 | 82.5 | 100 | 0 | 7.2 | 0 | 100 |
| | 1 | 100 | 93.4 | 100 | 18.3 | 36.9 | 13.1 | 100 |
| | 0.5 | 100 | 100 | 100 | 40.4 | 55.2 | 21.2 | 100 |
| | 0.25 | 100 | 100 | 100 | 60.1 | 78.8 | 33.4 | 100 |
| Com(B) | 2 | 83.2 | 83.7 | 100 | 15.6 | 0 | 0 | 100 |
| | 1 | 100 | 92.9 | 100 | 41.5 | 19.5 | 15.1 | 100 |
| | 0.5 | 100 | 100 | 100 | 65.7 | 32.5 | 26.2 | 100 |
| | 0.25 | 100 | 100 | 100 | 80.9 | 55.1 | 31.9 | 100 |
| Com(1)<br>Com(A) | 0.5<br>1 | 0 | 0 | 0 | 0 | 0 | 0 | 100 |
| Com(1)<br>Com(A) | 0.5<br>0.5 | 0 | 0 | 0 | 1.1 | 2.5 | 0 | 100 |
| Com(1)<br>Com(A) | 0.5<br>0.25 | 0 | 0 | 0 | 2.3 | 4.9 | 0 | 100 |
| Com(1)<br>Com(B) | 0.5<br>1 | 0 | 0 | 0 | 2.7 | 0 | 0 | 100 |
| Com(1)<br>Com(B) | 0.5<br>0.5 | 0 | 0 | 0 | 3.9 | 1.2 | 0 | 100 |
| Com(1)<br>Com(B) | 0.5<br>0.25 | 0 | 0 | 0 | 4.1 | 1.7 | 0 | 100 |
| Non-treat | - | 100 | 100 | 100 | 100 | 100 | 100 | 100 |

Experiment 5:

Test for crop plants and up-land weeds in foliage treatment:

The following tests were carried out in the up-land field in Ehorocho Kasoku Gun Hokkaido, wherein sugar beet was grown at 7 to 8 leaf stage and Chenopodium album L. (at 4 to 6 leaf stage: 7 to 15 cm) Chick weed (at 6 to 10 leaf stage: 5 to 10 cm), Echinochloa crus-galli Beauv (at 3 to 6 leaf stage: 10 to 25 cm), quack grass (at 2 to 5 leaf stage: 12 to 25 cm) were uniformly grown.

The up-land field was divided into each section of 10 $m^2$. The tests were carried out in three replicates.

Each emulsifiable concentrate prepared in accordance with the method of Composition No. 4, 5, 6, 7 or 8 was diluted with water to give the specific concentrations of the compounds and the diluted solution was uniformly sprayed at a rate of 400 liter/ha.

Thirty days after the treatment, the survival quantities of the plants were measured and the survival percents of the survival quantity in the treated zone to that in non-treated zone were calculated. The results are shown in Table 5.

| | |
|---|---|
| Chenopodium album L.: | C. A. |
| Chick weed: | C. |
| Echinochloa crus-galli beavu: | E. C. |
| Quack grass: | Q. G. |

Table 5

Test in up-land field in foliage treatment

| Comp. | Dose active ingredient (kg. /ha) | Test plant (survival percent (%)) | | | | |
|---|---|---|---|---|---|---|
| | | Beet | C. A. | C. | E. C. | Q. G. |
| Comp. (1) + Comp. (A) | 1.0 + 0.2 | 100 | 65 | 43 | 0 | 0 |
| | 0.5 + 0.1 | 100 | 93 | 70 | 0 | 18 |
| | 1.0 + 0.5 | 100 | 0 | 0 | 0 | 0 |
| | 0.5 + 0.25 | 100 | 37 | 40 | 0 | 10 |
| | 1.0 + 1.0 | 100 | 0 | 0 | 0 | 0 |
| | 0.5 + 0.5 | 100 | 0 | 0 | 0 | 0 |
| | 1.0 + 2.0 | 100 | 0 | 0 | 0 | 0 |
| | 0.5 + 1.0 | 100 | 0 | 0 | 0 | 0 |
| | 1.0 + 10.0 | 28 | 0 | 0 | 0 | 0 |
| | 0.5 + 5.0 | 87 | 0 | 0 | 0 | 0 |
| Comp. (1) | 2.0 | 100 | 100 | 100 | 0 | 4 |
| | 1.0 | 100 | 100 | 100 | 0 | 13 |
| | 0.5 | 100 | 100 | 100 | 3 | 38 |
| Comp. (A) | 10.0 | 30 | 0 | 0 | 13 | 65 |
| | 5.0 | 85 | 0 | 0 | 96 | 100 |
| | 2.0 | 100 | 0 | 0 | 100 | 100 |
| | 1.0 | 100 | 25 | 6 | 100 | 100 |
| | 0.5 | 100 | 60 | 45 | 100 | 100 |
| | 0.25 | 100 | 100 | 91 | 100 | 100 |
| Comp. (13) + Comp. (A) | 1.0 + 0.2 | 100 | 68 | 38 | 0 | 0 |
| | 0.5 + 0.1 | 100 | 95 | 65 | 0 | 31 |
| | 1.0 + 0.5 | 100 | 0 | 0 | 0 | 0 |
| | 0.5 + 0.25 | 100 | 35 | 28 | 0 | 28 |
| | 1.0 + 1.0 | 100 | 0 | 0 | 0 | 0 |
| | 0.5 + 0.5 | 100 | 0 | 0 | 0 | 20 |
| | 1.0 + 2.0 | 100 | 0 | 0 | 0 | 0 |
| | 0.5 + 1.0 | 100 | 0 | 0 | 0 | 21 |
| | 1.0 + 10.0 | 31 | 0 | 0 | 0 | 0 |
| | 0.5 + 5.0 | 93 | 0 | 0 | 0 | 23 |
| Comp. (B) | 2.0 | 100 | 100 | 100 | 0 | 11 |
| | 1.0 | 100 | 100 | 100 | 0 | 38 |
| | 0.5 | 100 | 100 | 100 | 24 | 67 |

Table 5 (cont'd)

Test in up-land field in foliage treatment

| Comp. | Dose active ingredient (kg. /ha) | Test plant (survival percent(%)) | | | | |
|---|---|---|---|---|---|---|
| | | Beet | C. A. | C. | E. C. | Q. G. |
| Comp. (15) + Comp. (A) | 1.0 + 0.2 | 100 | 70 | 52 | 100 | 0 |
| | 0.5 + 0.1 | 100 | 95 | 73 | 0 | 20 |
| | 1.0 + 0.5 | 100 | 0 | 4 | 0 | 0 |
| | 0.5 + 0.25 | 100 | 35 | 48 | 0 | 11 |
| | 1.0 + 1.0 | 100 | 0 | 0 | 0 | 0 |
| | 0.5 + 0.5 | 100 | 0 | 0 | 0 | 0 |
| | 1.0 + 2.0 | 100 | 0 | 0 | 0 | 0 |
| | 0.5 + 1.0 | 100 | 0 | 0 | 0 | 0 |
| | 1.0 + 10.0 | 30 | 0 | 0 | 0 | 0 |
| | 0.5 + 5.0 | 80 | 0 | 0 | 0 | 0 |
| Comp. (15) | 2.0 | 100 | 100 | 100 | 0 | 3 |
| | 1.0 | 100 | 100 | 100 | 0 | 15 |
| | 0.5 | 100 | 100 | 100 | 12 | 36 |
| Non-treat | - | 100 | 100 | 100 | 100 | 100 |

CLAIMS:

1) A herbicidal composition which comprises a phenoxy-pentenoic acid derivative having the formula

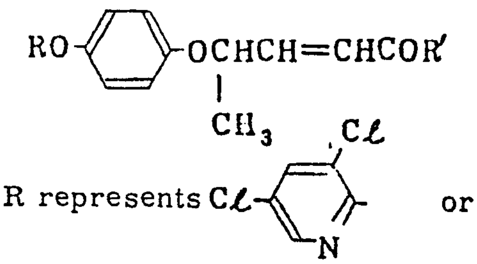

(I)

wherein R represents or

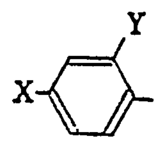

and X represents a halogen atom or trifluoromethyl group; Y represents hydrogen atom or chlorine atom; R' represents an alkoxyl group, an alkenyloxyl group, hydroxyl group, or O·Cat (Cat=inorganic or organic cation) or SR'' (R''=an alkyl group), and a carbamate derivative having the formula

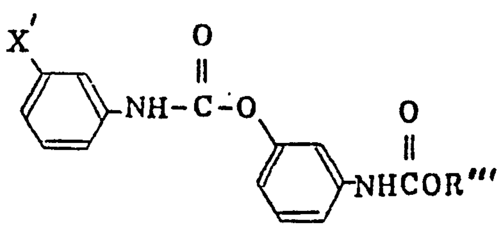

(II)

wherein R''' represents methyl or ethyl group; X' represents hydrogen atom or methyl group as active ingredients.

2) A herbicidal composition according to Claim 1 wherein a ratio of the compound (I) to the compound (II) is in a range of 1: 0.2 to 10 by weight.

3) A herbicidal composition according to Claim 1 wherein the phenoxypentenoic acid derivative is a phenoxyphenoxy pentenoic acid derivative having the formula

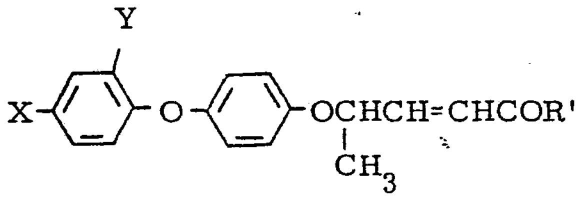

wherein X, Y and R' are defined above.

4) A herbicidal composition according to Claim 1 wherein the phenoxypentenoic acid derivative is a pyridyloxyphenoxy pentenoic acid derivative having the formula

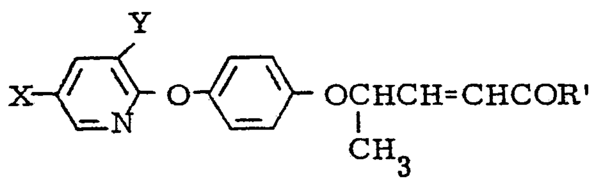

wherein X, Y and R' are defined above.

5) A herbicidal composition according to Claim 1 wherein the carbamate derivative (II) is 3-[(methoxycarbonyl)amino]phenyl-N-(3'-methylphenyl)carbamate or 3-[(ethoxycarbonyl)amino]phenyl-N-phenyl carbamate.

6) A herbicidal composition according to Claim 1 wherein the composition is in a form of granules, wettable powder, dust emulsifiable concentrate, fine powder, floable, or suspension prepared with an adjuvant which is used in the corresponding formulation.

7) A herbicidal composition according to Claim 1 wherein R' is a lower alkoxy group in the formula I.

8) A herbicidal composition according to Claim 1 wherein R' is a lower alkoxy group and R is 4-trifluoromethylphenyl group in the formula I.

9) A herbicidal composition according to Claim 1 wherein R' is a lower alkoxy group and R is 4-trifluoromethylphenyl group and the compound (II) is 3-methoxycarbonylaminophenyl-N-(3'-methylphenyl) carbamate.

0010232

European Patent Office

# EUROPEAN SEARCH REPORT

Application number

EP 79 10 3802

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | FR - A - 2 273 476 (HOECHST) | | A 01 N 47/22//<br>(A 01 N 47/22<br>43/40<br>39/02 |
| A | DE - A - 2 657 583 (HOECHST) | | |
| P,A | US - A - 4 163 661 (K. JIKIHARA et al.)<br>---- | | |
| | | | TECHNICAL FIELDS SEARCHED (Int.Cl. 3)<br>A 01 N 47/22<br>43/40<br>39/02 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| The Hague | 28-01-1980 | DECORTE |

EPO Form 1503.1 06.78